# EUROPÄISCHE PATENTANMELDUNG

(11) **EP 2 133 687 A2**
(43) Veröffentlichungstag der Anmeldung: **16.12.2009**
(21) Anmeldenummer: 09007446.9
(22) Anmeldetag: 05.06.2009
(51) Int. Cl.: G01N 21/53

(54) **Auslaufüberwachung von Kläranlagen**

(30) Priorität: 12.06.2008 DE 102008028058
(71) Anmelder: IP-Safetyfirst GmbH, 68804 Altlussheim (DE)
(72) Erfinder: Pleus, Iris, 68804 Altlussheim (DE); Henkel, Eberhard, 68804 Altlussheim (DE)
(74) Vertreter: Schmid, Rudolf

(57) **Zusammenfassung**

Die Erfindung betrifft eine Überwachungsvorrichtung (1) für den Auslauf von Kläranlagen mit einer an dem Auslauf befestigbaren Sonde (2), einem Trübungsmessgerät (4), das mit Messelektronik und Datenausgängen (6, 7) in ein unteres Ende der Sonde (2) integriert ist, einem elektrischen Anschluss (13) zu einem als Datenlogger ausgebildeten, externen Auswertegerät, einem Messstromkreis mit einem Schalter, der bei Stromausfall ein Signal abgibt, einem Display (15) mit Einstelleinrichtungen (16, 17), die in ein oberes Ende der Sonde (2) integriert sind und einem Sensor (8, 38).

## Beschreibung

Die Erfindung betrifft eine Überwachungsvorrichtung für den Auslauf von Kläranlagen, insbesondere eine Überwachungsvorrichtung für den Auslauf von Kläranlagen auf der Basis eines Trübungsmessgerätes, mit den Merkmalen des Oberbegriffs von Anspruch 1.

Kläranlagen dienen zur Reinigung von Abwasser. An Abwasserbehandlung zu stellende Mindestanforderungen gelten für Kleinkläranlagen als erfüllt, wenn eine durch allgemeine bauaufsichtliche Zulassung zertifizierte Abwasserbehandlungsanlage eingebaut und betrieben wird (sogenannte Einhaltefiktion). In der Zulassung müssen dabei die für eine ordnungsgemäße Funktionsweise erforderlichen Anforderungen an den Einbau, den Betrieb und die Wartung der Anlage festgelegt sein. Grundsätzlich hat der Betreiber der Kleinkläranlage deren ordnungsgemäßen Betrieb über regelmäßige Eigenkontrollen zu gewährleisteten. Im Rahmen dieser Eigenkontrollen ist der Betreiber zur allgemeinen Betriebskontrolle (z.B. Sichtprüfung, Zählerablesung) sowie unverzüglichen Mängel- und Störungsbeseitigungen und zur Führung eines sogenannten Klärbuchs gesetzlich verpflichtet. Problematisch ist jedoch, dass dem Betreiber in der Regel die fachliche Kompetenz fehlt, die Mängel- bzw. Störursachen richtig zu identifizieren oder zu beheben. In Verbindung mit latentem Desinteresse verfehlt die Eigenkontrolle in den meisten Fällen deshalb die gewünschte Wirkung. Folgerichtig hat der Betreiber in Ergänzung zur Eigenkontrolle die Wartung der Kläranlage in regelmäßigen Abständen von fachkundigen Unternehmen, auf der Basis eines Wartungsvertrages, durchführen zu lassen. Üblicherweise werden zwei Wartungen pro Jahr durchgeführt. Problematisch daran ist, dass die Wartungen zu festgesetzten Zeiten und somit nicht situationsgerecht erfolgen. Im schlimmsten Fall, treten unmittelbar nach eine Wartung Fehlfunktionen auf, die erst bei der nächsten Wartung erkannt und behoben werden können. In dem Bemühen, diesem Problem entgegenzuwirken, setzen Behörden und Hersteller verstärkt auf wesentlich kürzere Wartungsintervalle. Der hierdurch entstehende technische, personelle und logistische Mehraufwand führt nicht nur zu höheren Kosten, sondern geht aufgrund der zumeist langen Anfahrtswege auch zu Lasten der Umwelt, weswegen die Forderung nach kürzeren Wartungsintervallen wenig zielführend ist. Weil die Verkürzung von Wartungsintervallen unter ökonomischen und ökologischen Gesichtspunkten nicht vertretbar ist, verbleibt die vom Betreiber der Kleinkläranlage selbst durchzuführende Eigenkontrolle, um ordnungsgemäßen Betrieb der Kleinkläranlage zu gewährleisten. In Fachkreisen besteht breiter Konsens darüber, dass kontinuierliche Betriebskontrolle der Kleinkläranlagen, welche Betreibern wichtige Betriebsstörungen signalisiert, Abhilfe bezüglich deren fehlender Fachkompetenz schaffen und somit Quantität und Qualität der Eigenkontrolle verbessern kann. Wird unterstellt, dass bei schwerwiegenden Funktionsstörungen in Kleinkläranlagen erhöhter Schlammabtrieb im Ablauf-auftritt, ist die Trübungsmessung im Ablauf der geeignete Standard zur Betriebskontrolle. Auf dem Markt hierfür vorhandene Messgeräte sind aber sehr teuer (> 2.500 €) und müssen häufig gereinigt und kalibriert werden, weswegen ihr Einsatz bei Kleinkläranlagen bislang zu aufwändig ist.

Für die korrekte Messung der Trübung von Flüssigkeiten mit einem Trübungsmessgerät ist es notwendig, Beeinträchtigung der Messung durch in der Messstrecke des Trübungsmessgeräts entstehende Biofilme zu verhindern. Da die Entstehung der Biofilme zeitlich nicht beeinflussbar ist, würde dies zu kurzen Wartungsintervallen führen, die nicht erwünscht sind (s. o.). Daher fällt diese Lösung aus, wenn die Wartung z. B. auf maximal 2 x/Jahr begrenzt werden soll.

Bekannt sind Scheibenwischer zur Vermeidung von Biofilmen auf Trübungsmessgeräten. Diese halten zwar die im Messgang befindlichen optischen Gläser der Trübungsmessgeräte sauber, sind aber als zusätzliches, mechanisches Teil störempfindlich und wegen der Gefahr des Zerkratzens der optischen Gläser müssten Saphirgläser eingesetzt werden. Nachteilig ist auch der Verschleiß der Wischblätter, so dass Scheibenwischer zur Vermeidung von Biofilmen auf Trübungsmessgeräten insgesamt teuer und kompliziert sind.

Beschichtungen mit Speziallack auf PTFE-Basis, d. h. von Lacken und Beschichtungen, die auf der Basis des sogenannten "Lotuseffekts" basieren und von Beschichtungen bekannter Nano-Technologien stellen keine befriedigende Lösung dar. Die Biofilme lassen sich zwar leichter abwischen, aber die Probleme kurzer Wartungsintervalle und/oder teurer oder komplizierter Technik wären wiederum nicht gelöst.

Bekannt ist die Verwendung von UV-Licht zur Verhinderung von Keimbildung in der Medizin oder zur Entkeimung von Wasser mit UV-Licht mit Wellenlängen zwischen 250 nm und 260 nm, z. B. aus UV-LEDs mit 254 nm. Bekannt sind auch Durchfluss-Armaturen für Gartenteiche mit UV-Leuchtstoffröhren, durch die Teichwasser fließt, um zu verhindern, dass sich im Teich Grün- oder Braunalgen bilden, wobei die Durchfluss-Armaturen aus transparentem Kunststoff sind, der über sehr lange Zeit völlig sauber bleibt. Diese Methode ist auf Sterilisierung von Biomasse gerichtet und nicht auf deren Beseitigung.

Aufgabe der Erfindung ist es, eine Überwachungsvorrichtung für den Auslauf von Kläranlagen zu schaffen, bei der die Entstehung von Biofilmen in der Messstrecke des Trübungsmessgeräts von vorn herein be- oder verhindert wird.

Die Lösung erfolgt mit einer Überwachungsvorrichtung für den Auslauf von Kläranlagen mit den Merkmalen des Anspruchs 1.

Gemäß der Erfindung weist eine Überwachungsvorrichtung für den Auslauf von Kläranlagen eine an dem Auslauf befestigte Sonde auf, die vorteilhafterweise von oben in einen Revisionsschacht eines Auslaufs einer Kleinkläranlage eingebaut ist. Ein Trübungsmessgerät ist mit Messelektronik und Datenausgängen in ein unteres Ende der Sonde integriert und mit einem elektrischen Anschluss an ein externes Auswertegerät, z. B. einem Datenlogger, angeschlossen. Ein Messstromkreis weist einen Schalter auf, der bei Unterbrechung des Messstromkreises oder bei Stromausfall vorzugsweise mit Hilfe eines hierfür vorgesehenen Akkus ein Signal in Form eines Alarms abgibt, der vorzugsweise über ein Modem an eine Servicefirma weiter leitbar ist. Der Datenlogger der Auswerte-Elektronik zeichnet Messergebnisse des Trübungsmessgeräts auf, so dass der Verlauf der Trübung einer Kleinkläranlage nachverfolgbar ist. Ein Display zeigt real-time Messergebnisse des Trübungsmessgeräts an und Einstelleinrichtungen, die in ein oberes Ende der Sonde integriert sind, dienen für Testfunktionen und/oder Schwellwerteinstellungen. Ein Sensor in der Sonde ist durch das Gehäuse des Trübungsmessgeräts vom Tageslicht abgeschirmt, so dass bei Ausbau des Trübungsmessgeräts aus dem Revisionsschacht ein Alarm ausgegeben wird.

Gemäß einer bevorzugten Ausgestaltung der Erfindung weist das Trübungsmessgerät eine Lichtquelle, einen Streulicht- und einen Durchlichtempfänger auf und vorzugsweise sind der Streulichtempfänger mit einem analogen Ausgang für kontinuierliche Messergebnisse und der Durchlichtempfänger mit einem digitalen Ausgang für die Erfassung von Schwellwerten oberhalb 200 NTU verbunden.

Gemäß einer weiteren bevorzugten Ausgestaltung der Erfindung ist in dem Trübungsmessgerät eine UV-Lichtquelle vorgesehen, insbesondere auf einer Leiterplatte montierte UV-LEDs, die durch ein transparentes, UV-beständiges Kunststoffgehäuse des Trübungsmessgeräts strahlen, das insbesondere aus Polycarbonat als Spritzteil angefertigt oder als Glaskörper ausgebildet ist. Die UV-Lichtquelle beaufschlagt den Messweg des Trübungsmessgeräts, um sich auf dem Gehäuse bildenden Biofilm vor allem über lange Zeit zu verhindern.

Gemäß einer weiteren bevorzugten Ausgestaltung der Erfindung ist außerhalb des Trübungsmessgerät eine UV-Lichtquelle vorgesehen, insbesondere ein in einer als Quarzglasrohr ausgebildeten Halterung montierter UV-Leuchtkörper, die auf ein für UV-Licht intransparentes, UV-beständiges Gehäuse des Trübungsmessgeräts strahlen, das insbesondere aus Borosilikat-Glas angefertigt ist. Die UV-Lichtquelle beaufschlagt den Messweg des Trübungsmessgeräts von außen, um sich auf dem Gehäuse bildenden Biofilm zu verhindern.

Gemäß einer weiteren bevorzugten Ausgestaltung der Erfindung ist das Gehäuse des Trübungsmessgeräts aus transparentem, UV-beständigem Kunststoff, insbesondere Polycarbonat hergestellt.

Gemäß einer weiteren bevorzugten Ausgestaltung der Erfindung erfolgt die Umlenkung des Lichts per Totalreflexion für platzsparenden Einbau der Sender und Empfänger.

Gemäß einer weiteren bevorzugten Ausgestaltung der Erfindung erfolgt die Umlenkung des Lichts im Kunststoff-Spritzteil mit dem Vorteil, dass Glaskörper vermieden werden, die auch Dichtungen bedingen würden.

Gemäß einer weiteren bevorzugten Ausgestaltung der Erfindung ist das Gehäuse des Trübungsmessgeräts aus Glas hergestellt und in das Gehäuse sind die Lichtquelle, die Streulicht- und Durchlichtempfänger mit Dichtungen eingebaut. Das Glas des Gehäuses ist vorzugsweise im Bereich der Messstrecke mit Biofilm ver- oder behindernder Beschichtung versehen.

Gemäß einer weiteren bevorzugten Ausgestaltung der Erfindung ist Spiegelfolie im Gehäuse des Trübungsmessgeräts, vorzugsweise jeweils in einer Ebene von 45° vor dem Sender und vor dem Durchlichtempfänger vorgesehen, so dass das Spritzteil von unten so geformt werden kann, dass kein Boden eingeschweißt werden muss.

Gemäß einer weiteren bevorzugten Ausgestaltung der Erfindung ist die Messelektronik programmierbar für Unterscheidung langsam ansteigender Trübung von plötzlicher Trübung.

Gemäß einer weiteren bevorzugten Ausgestaltung der Erfindung ist der Sensor, der durch das Gehäuse des Trübungsmessgeräts vom Tageslicht abgeschirmt ist, so ausgelegt, dass er weder auf das Messsignal mit Licht nahe dem Infrarotbereich noch auf UV-Licht mit Wellenlängen zwischen 200-260 nm reagiert.

Gemäß einer weiteren bevorzugten Ausgestaltung der Erfindung ist der Sensor als Hall/Reed-Sensor ausgebildet für magnetische Detektion.

Gemäß einer weiteren bevorzugten Ausgestaltung der Erfindung ist die Messelektronik mit einem Schalter versehen, der nach dem Ruhestromprinzip bei Stromausfall über einen Akku ein Signal abgibt.

Anhand der Figuren, die bevorzugte Ausführungsbeispiele der Erfindung zeigen, wird diese nun näher beschrieben. Es zeigen:
Fig. 1: eine schematische Ansicht der erfindungsgemäßen Vorrichtung mit dem erfindungsgemäßen Trübungsmessgerät,
Fig. 2: einen Querschnitt des erfindungsgemäßen Trübungsmessgeräts in größerem Maßstab,
Fig. 3: einen Querschnitt durch eine alternative Ausgestaltung des erfindungsgemäßen Trübungsmessgeräts, und
Fig. 4: eine um 90° gedrehte Ansicht der alternativen Ausgestaltung aus Fig. 3.

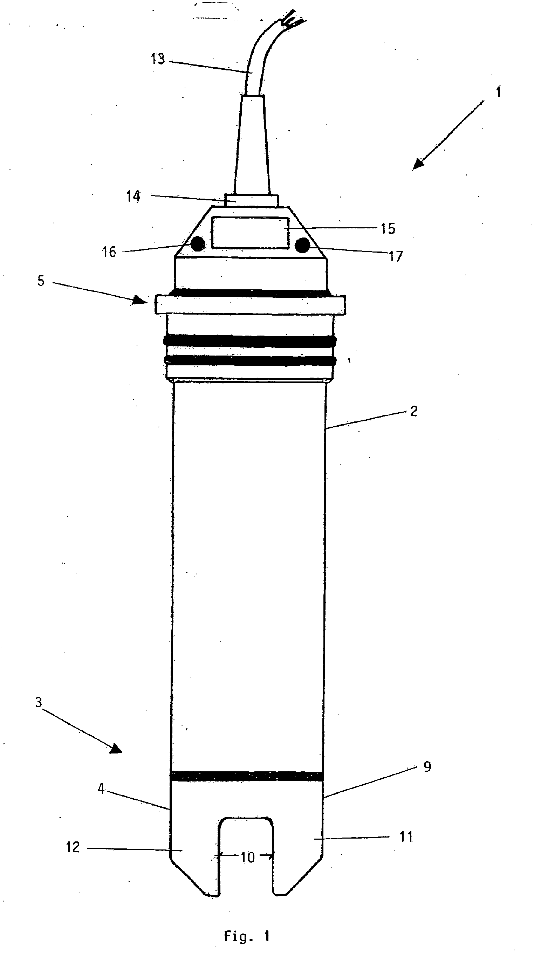

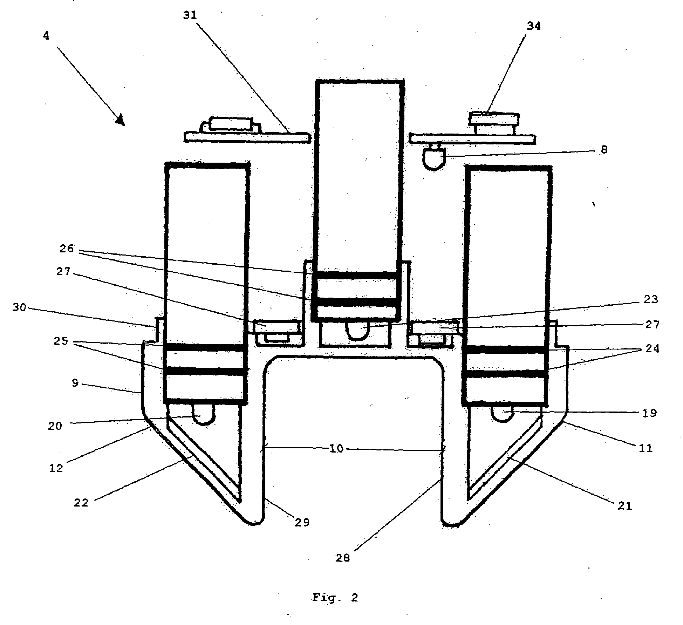

Fig. 1, 2: Eine Überwachungsvorrichtung 1 für einen Auslauf einer Kleinkläranlage weist eine an der Auslauf (nicht dargestellt) leicht zu montierende Sonde 2 auf. Die Sonde 2 ist als Rohr mit einem Durchmesser von maximal 63 mm, vorzugsweise 50 mm oder 40 mm ausgestaltet.

In unteren Teil 3 der Sonde 2 ist ein Trübungsmessgerät 4 mit Messelektronik und Datenausgängen integriert und ein Sensor 8, der durch das Gehäuse 9 des Trübungsmessgeräts 4 vom Tageslicht abgeschirmt ist. Die Messstrecke 10 des Trübungsmessgeräts 4 liegt zwischen einer, ersten Schenkel 11 und einem zweiten Schenkel 12 des Gehäuses 9.

Am oberen Ende 5 der Sonde 2 ist ein elektrischer Anschluss 13 zu einem externen Auswertegerät vorgesehen als fest eingebautes Kabel, wobei die Kabeldurchführung 14 in die Sonde 2 dem Standard IP 68 - Schutz gegen Berühren und gegen Eindringen von Fremdkörpern und von Wasser - entsprechen muss. Ein Display 15 mit Einstelleinrichtungen ist in das obere Ende 5 integriert mit 31/2stelliger LCD- oder LED-Anzeige zur Einstell-Anzeige des Schaltpunktes der Messelektronik 34, daneben eine Markierung 16, an der mit einem Magneten der Schaltpunkt eingestellt werden kann und eine Schnittstelle für Sondentests 17.

Messelektronik 34 und Alarm-Ausgänge mit einem Schalter, der bei Stromausfall ein Signal abgibt, sind in der Sonde 2 oder am Trübungsmessgerät 4 vorgesehen.

Alarmgabe und ein Datenlogger sind als externe Auswertegeräte (nicht dargestellt) der Überwachungsvorrichtung 1 vorgesehen.

Das Trübungsmessgerät 4 misst die Trübung geklärten Abwassers am Auslauf der Kleinkläranlage und weist ein am äußeren Umfang rotationssymmetrisches Gehäuse 9 auf, das an einem Flansch 30 formschlüssig und wasserdicht in die Sonde 2 einsetzbar ist. Das Gehäuse 9 enthält in dem ersten Schenkel 11 einen Sender 19 für Licht im infraroten Bereich und in dem zweiten, gegenüberliegenden Schenkel 12 einen Empfänger 20 für Licht, das vom Sender 19 durch die Messstrecke 10 zum Empfänger 20 gelangt, sogenanntes Durchlicht. Jeweils auf der Innenseite des Gehäuses 9, über dem Sender 19 und dem Empfänger 20 ist Spiegelfolie 21, 22 mit einem Winkel von ca. 45° zur Strahlungsrichtung so angeordnet, dass das Licht vom Sender 19 zum zweiten, gegenüberliegenden Schenkel 12 und von der Spiegelfolie 22 im zweiten, gegenüberliegenden Schenkel 12 zum Empfänger 20 total reflektiert wird.

Gehäuse 9 ist aus einem transparenten, UV-beständigen Kunststoff, insbesondere aus Polycarbonat als Spritzteil angefertigt oder als Glaskörper. Im Bereich der Messstrecke 10 kann der Glaskörper mit Biofilm ver- oder behindernder Beschichtung versehen sein.

Zentral im Gehäuse 9 des Trübungsmessgeräts 4 ist ein Streulicht-Empfänger 23 angeordnet. Sender 19, Empfänger 20 und Streulicht-Empfänger 23 werden von der Seite des Trübungsmessgeräts 4, die der Sonde 2 zugewandt ist, senkrecht in das offene Gehäuse 9 eingesetzt und mittels einer Leiterplatte 31 und Schrauben am Gehäuse 9 befestigt. Sender 19, Empfänger 20 und Streulicht-Empfänger 23 sind mit O-Ringen 24-26 im Gehäuse 9 abgedichtet. Auf die Leiterplatte 31 ist Messelektronik 34 aufgesteckt. Die mittels Laptop oder anderweitig digital über Kabel oder kabellos programmierbare Messelektronik 34 ist mittels Software einstellbar. Die Länge der Messstrecke ergibt sich aus dem Platzaufwand für Sender 19, Empfänger 20 und Streulicht-Empfänger 23, der Umlenkung und dem Durchmesser der Sonde 2.

Koaxial zum Streulicht-Empfänger 23 sind UV-LEDs 27 angeordnet, deren Strahlrichtung auf die Gehäuseflächen 28, 29 des Trübungsmessgeräts 4 gerichtet sind, die die Messstrecke 10 begrenzen.

Auf der dem Inneren des Gehäuses 9 zugewandten Seite der Leiterplatte 31 des Trübungsmessgeräts 4 ist der als Fotozelle ausgebildete Sensor 8 vorgesehen, der auf Tageslicht reagiert und nicht auf das Licht nahe beim Infrarot vom Sender 19 oder auf das Licht von der UV-Quelle 27. Das Trübungsmessgerät 4 ist an ein Netzteil zur Stromversorgung angeschlossen.

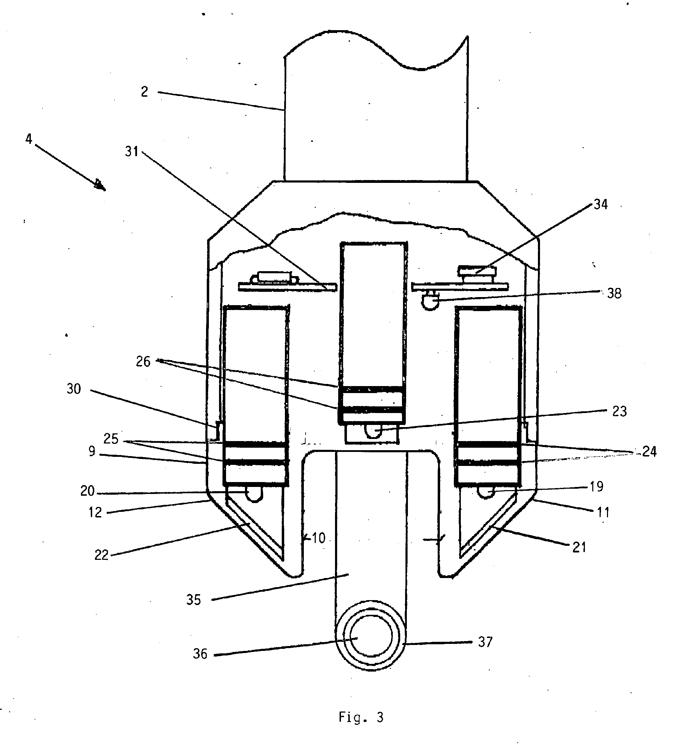

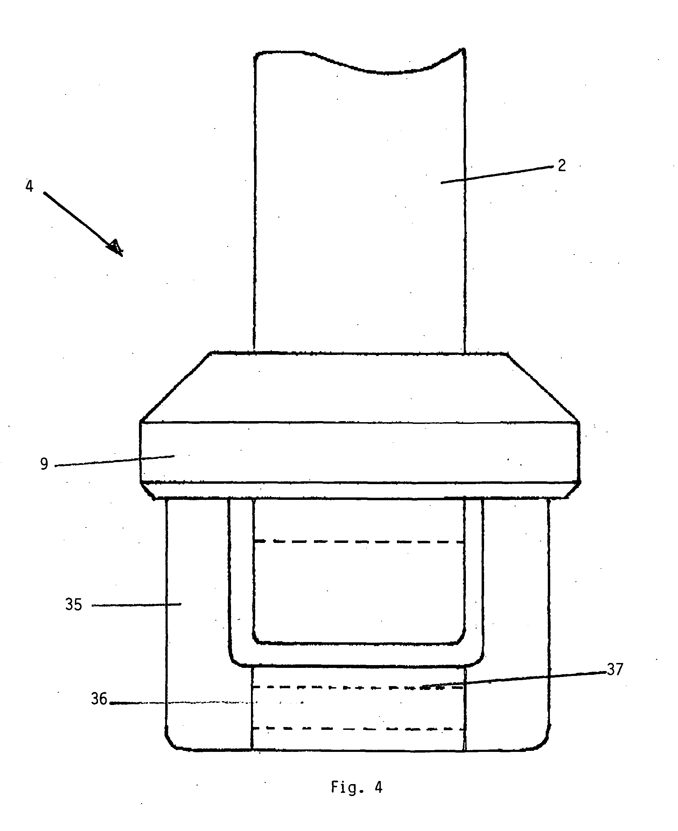

Fig. 3, 4: Entsprechende Merkmale sind mit den Bezugszeichen aus Fig. 1 und 2 versehen. Gehäuse 9 aus Kunststoff oder Edelstahl ist an Flansch 30 formschlüssig und wasserdicht in die Sonde 2 eingesetzt. Das Gehäuse 9 enthält in dem ersten Schenkel 11 den Sender 19 für Licht im infraroten Bereich und in dem zweiten, gegenüberliegenden Schenkel 12 den Empfänger 20 für Durchlicht, das vom Sender 19 durch die Messstrecke 10 zum Empfänger 20 gelangt. Jeweils auf der Innenseite des Gehäuses 9, über dem Sender 19 und dem Empfänger 20 ist Spiegelfolie 21, 22 mit einem Winkel von ca. 45° zur Strahlungsrichtung so angeordnet, dass das Licht vom Sender 19 zum zweiten, gegenüberliegenden Schenkel 12 und von der Spiegelfolie 22 im zweiten, gegenüberliegenden Schenkel 12 zum Empfänger 20 total reflektiert wird.

Gehäuse 9 ist aus einem für UV-Licht intransparenten, UV-beständigen Kunststoff, insbesondere aus Polycarbonat als Spritzteil angefertigt oder als für UV-Licht intransparenter, UV-beständiger Glaskörper. Im Bereich der Messstrecke 10 kann der Glaskörper mit Biofilm ver- oder behindernder Beschichtung versehen sein.

Zentral im Gehäuse 9 des Trübungsmessgeräts 4 ist der Streulicht-Empfänger 23 angeordnet. Sender 19, Empfänger 20 und Streulicht-Empfänger 23 werden von der Seite des Trübungsmessgeräts 4, die der Sonde 2 zugewandt ist, senkrecht in das offene Gehäuse 9 eingesetzt und mittels einer Leiterplatte 31 und Schrauben am Gehäuse 9 befestigt. Sender 19, Empfänger 20 und Streulicht-Empfänger 23 sind mit O-Ringen 24-26 im Gehäuse 9 abgedichtet. Auf die Leiterplatte 31 ist Messelektronik 34 aufgesteckt.

Anstelle der UV-LEDs 27 ist außen am Gehäuse 9 eine im wesentlichen U-förmige Halterung 35 aus Kunststoff oder Edelstahl für einen UVC-Leuchtkörper 36, insbesondere eine Röhrenlampe parallel unterhalb der Messstrecke 10 angeordnet. Der UVC-Leuchtkörper 36 ist flüssigkeitsdicht in einem UVC-durchlässigen Quarzglasrohr 37 enthalten, das in der Halterung 35 gelagert ist. Der UVC-Leuchtkörper 36 strahlt mit einer Wellenlänge von 250 - 260 nm, vorzugsweise mit 254 nm durch das Quarzglasrohr 37 auf die Gehäuseflächen 28, 29 des Trübungsmessgeräts 4, die die Messstrecke 10 begrenzen.

Anstelle des als Fotozelle ausgebildeten Sensors 8 ist als Ausbausicherung ein Hall/Reed-Sensor 38 vorgesehen, der Herausnehmen der Sonde 2 magnetisch detektiert und mit dem Trübungsmessgerät 4 an ein Netzteil zur Stromversorgung angeschlossen ist.

### Verfahren zum Betrieb der Überwachungsvorrichtung 1

Die Überwachungsvorrichtung 1 misst die Kombination von Streulicht und Durchlicht von geklärtem Abwasser am Auslauf der Kleinkläranlage. Die Messung erfolgt mehrmals/Tag für die Pumpzeit der Kläranlage und wird dem Datenlogger im Auswertegerät als i.O. od. Trübungsalarm gemeldet. Der Datenlogger zeichnet die Messergebnisse auf, so dass ein täglicher Nachweis über die ordnungsgemäße Funktion der Kleinkläranlage ausgelesen werden kann. Während der Messung sind die UV-LEDs 27 oder UVC-Leuchtkörper 36 ausgeschaltet.

Unterschieden wird zwischen sprunghafter und stetiger Trübungszunahme. Bei stetiger Trübungszunahme meldet die Messelektronik 34 "Scheibenverschmutzung".

Wird das Trübungsmessgerät 4 ausgebaut und dadurch die Überwachung der Kleinkläranlage verhindert, gibt der Sensor 8 oder der Hall/Reed-Sensor 38 eine Meldung aus. Ausbau der Sonde 2 wird vom Hall/Reed-Sensor 38 und Kontakt zum Tageslicht wird vom Sensor 8 als "Tageslicht" gemeldet und als "Sonde ausgebaut" an das Auswertegerät abgegeben. Die UV-LEDs 27 oder UVC-Leuchtkörper 36 werden ausgeschaltet und die Sonde 2 kann mit einem Festkörper (nicht dargestellt) getestet werden. Deshalb sollte die Funktion "Sondentest" mit einem Magneten vorgesehen werden. Das würde einer Servicefirma zeigen, ob die Sonde i.O. ist oder nicht. Dabei springt die Anzeige auf den aktuellen Wert, der durch Tippen mit dem Magneten auf den Auslieferungswert zurückgesetzt werden kann. Nach 2 Min. springt die Anzeige auf den Schaltpunkt (Schwellwert) zurück. Statt Tippen mit dem Magneten kann die Sonde mit einer Fernwirktechnik mittels einem Laptop oder anderweitig digital über Kabel oder kabellos programmierbar sein, indem z. B. die o. g. Dauer von 2 Min. ausles- und einstellbar ist.

Als letztes Glied des Messkreises ist ein Kontaktgeber (nicht dargestellt) für ein akustische Signal als Alarm vorgesehen, der bei Unterbrechung des Messstromkreises oder Ausfall des Netzteils schaltet. Der Messstromkreis ist hierfür mit einem kleinen Akku verbunden, der eine Zeitlang den Alarm aufrecht erhält und gegebenenfalls über ein Modem und/oder die o. g. Fernwirktechnik an die Servicefirma weiterleitet.

Langsam ansteigende Trübung in der Messstrecke 10 durch wachsenden Biofilm auf dem Gehäuse 9 sowie sprunghafter Anstieg der Trübung bei Fehlfunktion der Kleinkläranlage werden von der Software unterschieden.

Erforderlichenfalls erfolgt eine Selbstkalibrierung der Überwachungsvorrichtung 1 mit Einstellung eines Grundwertes und Vergleichsmessstrecke für die Einstellung des Grenzwertes auf einer 3. Leiterplatte.

Netzteil, Auswerte- + Meldeelektronik sind in einem handelsüblichen Wandgehäuse IP 55 mit Klarsichtdeckel (nicht dargestellt) untergebracht mit Klemmleiste und Anschlussmöglichkeit an ein externes Modem und/oder Fernwirktechnik.

## Patentansprüche

1. Überwachungsvorrichtung (1) für den Auslauf von Kläranlagen mit
einer an dem Auslauf befestigbaren Sonde (2),
einem Trübungsmessgerät (4), das mit Messelektronik und Datenausgängen (6, 7) in ein unteres Ende der Sonde (2) integriert ist,
einem elektrischen Anschluss (13) zu einem als Datenlogger ausgebildeten, externen Auswertegerät,
einem Messstromkreis mit einem Schalter, der bei Stromausfall ein Signal abgibt,
einem Display (15) mit Einstelleinrichtungen (16, 17), die in ein oberes Ende der Sonde (2) integriert sind und
einem Sensor (8, 38), der durch das Gehäuse (9) des Trübungsmessgeräts (4) vom Tageslicht abgeschirmt ist.

2. Überwachungsvorrichtung (1) gemäß Anspruch 1, **dadurch gekennzeichnet, dass** das Trübungsmessgerät (4) einen Sender für Licht (19), einen Streulicht- und einen Durchlichtempfänger (23, 20) aufweist und der Streulichtempfänger (23) mit einem analogen Ausgang und der Durchlichtempfänger (20) mit einem digitalen Ausgang verbunden sind.

3. Überwachungsvorrichtung (1) gemäß Anspruch 2, **dadurch gekennzeichnet, dass** an dem Trübungsmessgerät (4) eine UV-Lichtquelle (27, 36) vorgesehen ist, insbesondere auf einer Leiterplatte montierte UV-LEDs (27), die den Messweg des Trübungsmessgeräts (4) beaufschlagt.

4. Überwachungsvorrichtung (1) gemäß Anspruch 3, **dadurch gekennzeichnet, dass** bei innerhalb des Gehäuses (9) des Trübungsmessgeräts (4) angeordneter Lichtquelle (27) das Gehäuse (9) aus transparentem, UV-beständigem Kunststoff, insbesondere Polycarbonat, hergestellt ist.

5. Überwachungsvorrichtung (1) gemäß Anspruch 3, **dadurch gekennzeichnet, dass** bei außerhalb des Gehäuses (9) des Trübungsmessgeräts (4) angeordneter Lichtquelle (36) das Gehäuse (9) aus für UV-Licht intransparentem, UV-beständigem Glas, insbesondere Borosilikat-Glas, hergestellt ist.

6. Überwachungsvorrichtung (1) gemäß Anspruch 2, **dadurch gekennzeichnet, dass** die Umlenkung des Lichts (19) mittels Totalreflexion erfolgt.

7. Überwachungsvorrichtung (1) gemäß Anspruch 2, **dadurch gekennzeichnet, dass** die Umlenkung des Lichts (19) im Kunststoff- oder Glasgehäuse (9) erfolgt.

8. Überwachungsvorrichtung (1) gemäß Anspruch 2, **dadurch gekennzeichnet, dass** das Gehäuse (9) des Trübungsmessgeräts (4) aus Glas hergestellt ist, in das der Lichtsender (19), die Streulicht- und Durchlichtempfänger (23, 20) eingebaut sind.

9. Überwachungsvorrichtung (1) gemäß Anspruch 2, **dadurch gekennzeichnet, dass** das Gehäuse (9) des Trübungsmessgeräts (4) aus beschichtetem Glas hergestellt ist.

10. Überwachungsvorrichtung (1) gemäß einem der Ansprüche 2 bis 8, **dadurch gekennzeichnet, dass** Spiegelfolie (21, 22) im Gehäuse (9) des Trübungsmessgeräts (4) vorgesehen ist, das vorzugsweise jeweils in einer Ebene von 45° vor dem Sender (19) und vor dem Durchlichtempfänger (20) vorgesehen ist.

11. Überwachungsvorrichtung (1) gemäß einem der vorhergehenden Ansprüche, **dadurch gekennzeichnet, dass** die Messelektronik (34) programmierbar ist.

12. Überwachungsvorrichtung (1) gemäß einem der vorigen Ansprüche, **dadurch gekennzeichnet, dass** der Sensor (8), der durch das Gehäuse (9) des Trübungsmessgeräts (4) vom Tageslicht abgeschirmt ist, weder auf das Messsignal noch auf das UV-Licht reagiert.

13. Überwachungsvorrichtung (1) gemäß einem der vorigen Ansprüche, **dadurch gekennzeichnet, dass** der Sensor (38) als Hall/Reed-Sensor ausgebildet ist.

14. Überwachungsvorrichtung (1) gemäß einem der vorhergehenden Ansprüche, **dadurch gekennzeichnet, dass** die Messelektronik (34) mit einem Schalter versehen ist, der bei Stromausfall über einen Akku ein Signal abgibt.
